(19) Europäisches Patentamt

European Patent Office

Office européen des brevets

(11) **EP 2 264 298 A1**

(12) **DEMANDE DE BREVET EUROPEEN**

(43) Date de publication:
**22.12.2010 Bulletin 2010/51**

(51) Int Cl.:
*F02D 9/02* (2006.01)  *F02D 23/00* (2006.01)
*F02D 41/18* (2006.01)

(21) Numéro de dépôt: **10305428.4**

(22) Date de dépôt: **23.04.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **29.05.2009 FR 0902595**

(71) Demandeur: **Renault S.A.S.**
**92100 Boulogne-Billancourt (FR)**

(72) Inventeurs:
• **Serra, Bruno**
**91150 Etampes (FR)**
• **Hourlier, Sylvain**
**78170 La Celle St Clous (FR)**

(54) **Procédé d'estimation de la pression en aval d'un volet d'admission d'un système d'admission d'un moteur à combustion interne suralimenté**

(57) Procédé d'estimation de la pression en aval d'un volet d'admission d'un système d'admission d'un moteur à combustion interne suralimenté le procédé comprenant une étape de détermination de valeurs de paramètres du système d'admission et étape de traitement des valeurs de sorte à calculer une estimation de la pression en aval d'un volet d'admission.

EP 2 264 298 A1

**Description**

La présente invention se rapporte au domaine du contrôle des moteurs à combustion interne du type suralimenté.

En particulier, la présente invention concerne un procédé de détermination ou d'estimation d'une pression en aval d'un volet d'admission et d'une vanne EGR. Elle concerne également un procédé de diagnostic d'un capteur de mesure de la pression en aval d'un volet d'admission et d'une vanne EGR. L'invention concerne aussi un dispositif d'estimation mettant en oeuvre le procédé d'estimation évoqué précédemment. L'invention concerne aussi un dispositif de diagnostic mettant en oeuvre le procédé de diagnostic évoqué précédemment. L'invention concerne encore un support de données comprenant des moyens logiciels destinés à mettre en oeuvre de tels procédés. L'invention concerne enfin un programme logiciel mettant en oeuvre de tels procédés.

Afin de calculer le débit de gaz d'échappement recirculés ou EGR (pour exhaust gaz recirculation) en amont d'un compresseur de suralimentation, le contrôle moteur nécessite d'avoir un capteur de pression en aval d'une vanne EGR ainsi qu'un capteur de température en amont de cette vanne et un capteur de différence de pression entre l'entrée et la sortie de cette vanne.

En effet, l'introduction d'EGR impose de déterminer et de contrôler le débit d'EGR introduit dans le moteur afin de pouvoir contrôler le régime et le couple de ce dernier. Cette détermination est actuellement permise par tous les capteurs évoqués précédemment.

Cependant, la présence de tous ces capteurs pèse sur les coûts de fabrication.

Le but de l'invention est de fournir un procédé d'estimation d'une pression permettant de remédier au problème évoqué précédemment et améliorant les procédés de détermination de pression connus de l'art antérieur. En particulier, l'invention propose un procédé d'estimation de pression simple, permettant de s'affranchir de l'utilisation d'un capteur de pression en aval d'une vanne EGR. Alternativement, l'Invention propose un procédé de diagnostic permettant de vérifier qu'un capteur, comme un capteur de pression disposé en aval d'une vanne EGR, fonctionne correctement ou non.

Selon l'invention, le procédé permet d'estimer de la pression en aval d'un volet d'admission d'un système d'admission d'un moteur à combustion interne suralimenté. Le procédé comprend une étape de détermination de valeurs de paramètres du système d'admission et une étape de traitement des valeurs de sorte à calculer une estimation de la pression en aval d'un volet d'admission.

L'étape de détermination de valeurs peut comprendre la détermination d'une valeur de pression en amont du volet d'admission, la détermination d'une valeur de débit traversant le volet d'admission et la détermination d'une valeur de température en amont du volet d'admission.

L'étape de traitement peut comprendre le calcul suivant :

$$P_{aval} = P_{amont} \times Cfe^{-1}\left[ Q_{air} \times \frac{\sqrt{T_{amont}}}{P_{amont} \times SecEff} \right]$$

avec:

Cfe: un coefficient de flux surfacique propre au volet d'admission: il s'agit d'une donnée de cartographie, définie par exemple sur un banc aéraulique,

SecEff: l'aire de la section efficace de passage du volet d'admission.

L'étape de détermination de valeurs peut comprendre la détermination d'une valeur de pression en aval d'un compresseur lorsque le moteur est en mode de fonctionnement atmosphérique.

L'étape de traitement peut comprendre le traitement suivant:

$$P_{aval} = P_{sural}$$

lorsque le moteur est en mode de fonctionnement atmosphérique.

L'étape de détermination de valeurs peut comprendre la détermination d'une valeur de pression la pression atmosphérique pour utilisation lorsque le moteur est en mode de fonctionnement suralimenté.

L'étape de traitement peut comprendre le traitement suivant :

$$P_{aval} = P_{atmo}$$

lorsque le moteur est en mode de fonctionnement suralimenté avec contre pression.

L'étape de détermination de valeurs peut comprendre la détermination d'une différence de pression ($\Delta_p$) aux bornes d'une vanne EGR (30) lorsque le moteur est en mode de fonctionnement suralimenté faible.

L'étape de traitement peut comprendre le calcul suivant:

$$P_{aval} = P_{atmo} - \Delta_p$$

lorsque le moteur est en mode de fonctionnement suralimenté faible.

Selon l'invention, le procédé de diagnostic d'un capteur de pression en aval d'un volet d'admission d'un système d'admission d'un moteur à combustion interne suralimenté, comprend une étape de mise en oeuvre du procédé d'estimation défini précédemment, une étape de mesure de pression grâce au capteur de pression en aval du volet d'admission et une étape de comparaison des valeurs estimée et mesurée de la pression.

L'invention porte aussi sur un support d'enregistrement de données lisible par un calculateur sur lequel est enregistré un programme d'ordinateur comprenant des moyens logiciels de mise en oeuvre des étapes du procédé défini précédemment.

Selon l'invention, le dispositif d'estimation de la pression en aval d'un volet d'admission d'un système d'admission d'un moteur à combustion interne suralimenté est caractérisé en ce qu'il comprend des moyens matériels et/ou logiciels de mise en oeuvre du procédé d'estimation défini précédemment.

Selon l'invention, le dispositif de diagnostic d'un capteur de pression en aval d'un volet d'admission d'un système d'admission d'un moteur à combustion interne suralimenté est caractérisé en ce qu'il comprend un dispositif d'estimation défini précédemment.

Selon l'invention, le moteur à combustion interne suralimenté est caractérisé en ce qu'il comprend un dispositif de diagnostic défini précédemment ou un dispositif d'estimation défini précédemment.

Le moteur peut comprendre un moyen de recirculation des gaz d'échappement entre la sortie d'une turbine et l'entrée du compresseur de suralimentation.

Le dessin annexé représente, à titre d'exemples, deux modes de réalisation d'un dispositif d'estimation de pression selon l'invention.

La figure 1 est un schéma d'un moteur à combustion interne équipé d'un premier mode de réalisation d'un dispositif d'estimation de pression selon l'invention.

La figure 2 est un schéma d'un moteur à combustion interne équipé d'un deuxième mode de réalisation d'un dispositif d'estimation de pression selon l'invention.

Le procédé d'estimation de pression selon l'invention permet de remplacer un capteur de pression disposé en aval d'un volet d'admission et d'une vanne EGR par la modélisation de cette pression nécessaire au calcul du débit d'EGR pour une application EGR Basse Pression. Alternativement, le procédé d'estimation de pression selon l'invention permet de diagnostiquer l'état d'un capteur de pression disposé en aval d'un volet admission et d'une vanne EGR par la modélisation de cette pression nécessaire au calcul du débit d'EGR pour une application EGR Basse Pression.

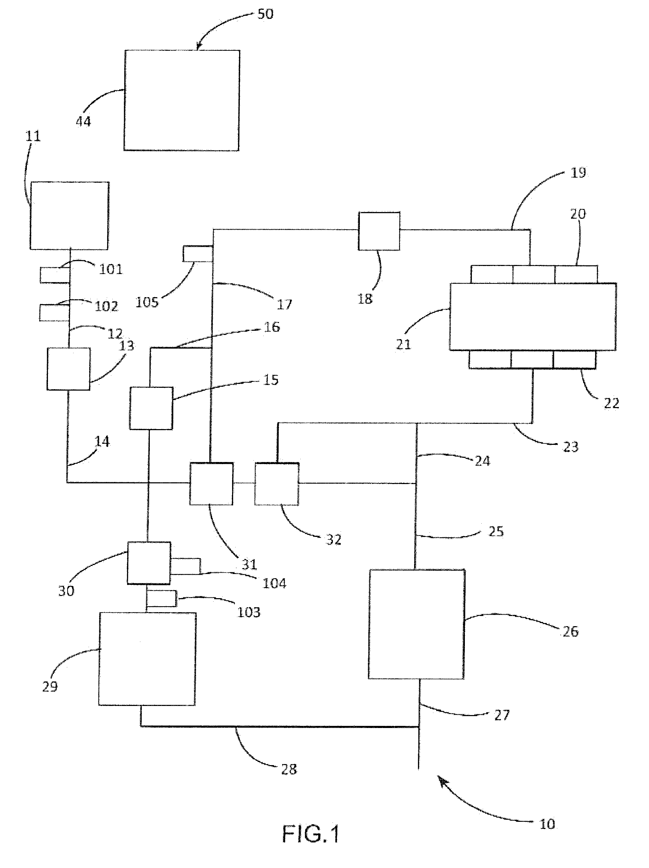

Le moteur 10 à combustion interne représenté à la figure 1 est du type suralimenté. Il est équipé d'un dispositif 50 d'estimation de la pression en aval d'une vanne EGR.

On décrit ci-après le moteur 10 en référence à la figure 1 en suivant le cheminement des gaz dans celui-ci. Les gaz frais rentrent dans le moteur via un filtre à air 11, puis sont dirigés vers un compresseur 31 (faisant par exemple partie d'un turbo compresseur), au travers d'une première tubulure 12, d'un volet d'admission d'air 13 et d'une deuxième tubulure 14. Depuis la sortie du compresseur, les gaz frais sont dirigés vers un collecteur d'admission 20 les distribuant dans un bloc-moteur 21, au travers d'une troisième tubulure 17, d'un volet de gaz 18 et d'une quatrième tubulure 19. Le compresseur 31 peut être by-passé grâce à une cinquième tubulure 16 dans laquelle le cheminement des gaz est ou non autorisé par une vanne 15.

Une fois la combustion réalisée dans le bloc-moteur 21, les gaz d'échappement sortent de celui-ci par un collecteur 22. Ils sont dirigés vers une turbine 32 via une sixième tubulure 23. En sortie de turbine, les gaz d'échappement sont rejetés après avoir transité dans une septième tubulure 25, puis dans un système de dépollution 26 et dans une huitième tubulure 27. Comme à l'admission, la turbine 32 peut être by-passée grâce à une neuvième tubulure 24 dans laquelle le cheminement des gaz d'échappement est ou non autorisé par une vanne.

Un moyen est prévu pour qu'une partie des gaz d'échappement puisse être réintroduite à l'admission en amont du compresseur. Ce moyen comprend par exemple une dixième tubulure 28 canalisant les gaz d'échappement au travers d'un refroidisseur 29 et d'une vanne 30.

Pour permettre un bon contrôle du moteur, celui-ci est équipé de plusieurs capteurs fournissant des valeurs ou signaux de paramètres en différents points du système d'admission.

Le remplacement d'un capteur de pression en aval du volet d'admission et de la vanne EGR par un modèle peut se faire de deux manières différentes correspondant aux deux modes de réalisation qui vont être décrits par la suite. Suivant les deux modes de réalisation proposés, la valeur de la pression en aval de la vanne EGR peut être estimée grâce à la relation:

$$Q_{moteur} = Q_{air} + Q_{egr}$$

Avec:

Q$_{moteur}$ : le débit de gaz entrant dans le bloc cylindre,
Q$_{air}$ : le débit de gaz entrant dans le filtre à air et
Q$_{cgr}$ : le débit de gaz recirculés.

Dans un premier mode de réalisation, on remplace le capteur de pression absolue par un modèle d'apprentissage de la pression d'admission à laquelle est soustraite une estimation de pression en aval du volet d'admission en fonction de la position de celui-ci, cette position dépendant du régime et de la charge moteur, par exemple selon une cartographie.

Dans ce premier mode de réalisation, le dispositif 50 d'estimation de la pression en aval de la vanne EGR comprend un calculateur 44 et des capteurs 101, 102 et 105.

Le premier capteur 101 est un capteur de débit implanté sur une tubulure d'admission en amont du volet d'admission 13.

Le deuxième capteur 102 est un capteur de température implanté sur une tubulure d'admission en amont du volet d'admission 13.

Le troisième capteur 105 est un capteur de pression implanté sur une tubulure 17 entre le compresseur 31 et le volet de gaz 18.

Tous ces capteurs sont reliés au calculateur 44. Ces capteurs fournissent donc des informations utilisées par le calculateur 44 pour déterminer la pression P$_{aval}$ en aval de la vanne EGR.

Grâce aux moyens évoqués ci-dessus, le procédé décrit ci-après peut être mis en oeuvre.

Dans la relation:

$$Q_{moteur} = Q_{air} + Q_{egr}$$

*Q$_{air}$* est déterminé grâce à un capteur de débit, la pression en aval de la vanne EGR P$_{aval}$ découle de cette information.

*Q$_{ogr}$* est déterminé grâce à des capteurs de pression et de température.

En partant de l'équation du débit d'air de Barré de St Venant :

$$Q_{air} = SecEff \times \frac{P_{amont}}{\sqrt{T_{amont}}} \times Cfe\left(\frac{P_{aval}}{P_{amont}}\right)$$

d'où:

$$Cfe\left(\frac{P_{aval}}{P_{amont}}\right) = Q_{air} \times \frac{\sqrt{T_{amont}}}{P_{amont} * SecEff}$$

Le coefficient de flux surfacique Cfe est une cartographie déterminée au banc aéraulique pour un volet donné.

Ainsi, on obtient, en inversant la cartographie de Cfe :

$$\frac{P_{aval}}{P_{amont}} = Cfe^{-1}\left[Q_{air} \times \frac{\sqrt{T_{amont}}}{P_{amont} \times SecEff}\right]$$

d'où:

$$P_{aval} = P_{amont} \times Cfe^{-1}\left[Q_{air} \times \frac{\sqrt{T_{amont}}}{P_{amont} \times SecEff}\right]$$

avec :

$P_{amont}$ : la pression atmosphérique donnée par l'apprentissage de la valeur du capteur de suralimentation (capteur de pression 105) avant la mise en marche du moteur ou lors de phases de fonctionnement particulière du moteur ou donnée par un capteur de pression atmosphérique,

$T_{amont}$ : la température donnée par le capteur de température 102,

$SecEff$ : l'aire de la section efficace de passage du volet d'admission.

Le calcul est valable lorsque le volet n'est pas en position pleine ouverture.

Un dispositif de contrôle moteur intègre, outre le dispositif d'estimation de pression 50 évoqué précédemment, d'autres capteurs comme un quatrième capteur de température 103 implanté sur une tubulure entre le refroidisseur 29 et la vanne EGR 30 et un cinquième capteur de différence de pression 104 implanté sur la vanne EGR 30 pour déterminer la différence de pression entre l'entrée et la sortie de la vanne.

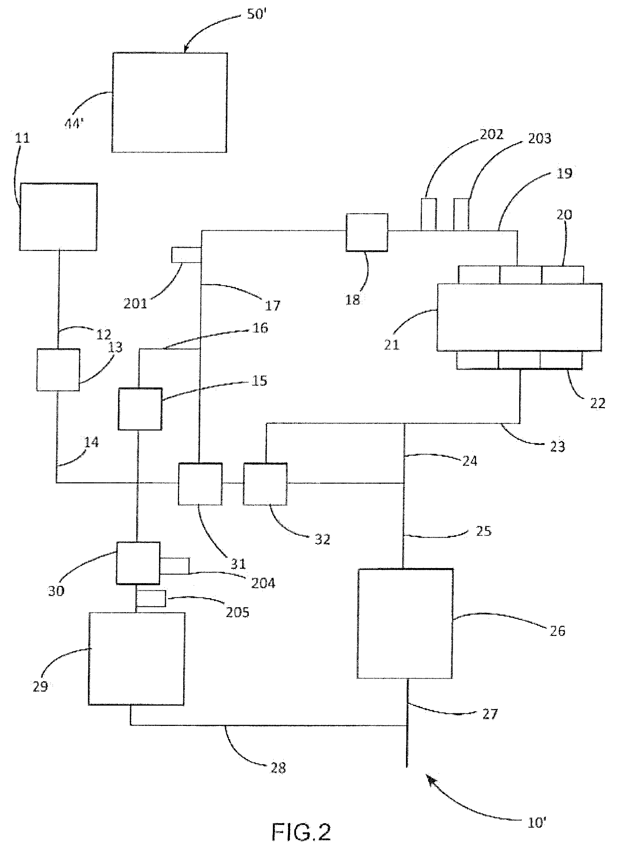

Dans un deuxième mode de réalisation, représenté à la figure 2, on a remplacé le capteur de pression absolue par un modèle de pression d'admission à laquelle est soustraite une pression issue de l'information d'un capteur de différence de pression aux bornes de la vanne EGR (phase de fonctionnement atmosphérique et Patmo en phase de fonctionnement suralimentée). En phase de fonctionnement atmosphérique, la pression est égale à la pression lue par le capteur 201. En zone faiblement suralimentée (volet 13 partiellement fermé), la pression vaut $P_{almo}-\Delta_p$, En zone fortement suralimentée (volet 13 ouvert), cette pression vaut la pression atmosphérique.

Dans ce deuxième mode de réalisation, le dispositif 50' d'estimation de la pression en aval de la vanne EGR comprend un calculateur 44' et des capteurs 201 ou 202 et 204.

Le premier capteur 201 est un capteur de pression implanté sur une tubulure 17 entre le compresseur 31 et le volet de gaz 18.

Le deuxième capteur 202 est un capteur de pression implanté sur une tubulure 19 en aval du volet de gaz 18 et en amont du bloc cylindre 21.

Le troisième capteur 204 est un capteur de différence de pression entre l'entrée et la sortie de la vanne EGR.

Tous ces capteurs sont reliés au calculateur 44'. Ces capteurs fournissent donc des informations utilisées par le calculateur 44' pour déterminer la pression $P_{aval}$ en aval de la vanne EGR.

Grâce aux moyens évoqués ci-dessus, le procédé décrit ci-après peut être mis en oeuvre.

Dans la relation :

$$Q_{moteur} = Q_{air} + Q_{egr}$$

$Q_{moteur}$ est déterminé grâce à des capteurs de pression et de température,

$Q_{egr}$ est déterminé grâce à des capteurs de pression et de température, la valeur de pression en aval de la vanne EGR $P_{aval}$ découle de cette information.

Dans ce cas, on utilise le capteur 204 de différence de pression aux bornes de la vanne EGR et l'apprentissage de la pression atmosphérique.

On distingue les zones de fonctionnement ainsi que les restrictions d'utilisation du procédé :

En zone de fonctionnement atmosphérique :

$$P_{aval} = P_{sural}$$

En zone de fonctionnement suralimenté faible:

$$P_{aval} = P_{atmo} - \Delta_p$$

La zone suralimentée faible est définie lorsque le compresseur commence à compresser l'air mais que la contre pression d'échappement est trop faible pour générer naturellement une différence de pression aux bornes de la vanne EGR ($\Delta_p$=0 sans volet d'admission ou avec le volet ouvert). En l'occurrence, dans cette phase de fonctionnement, la différence de pression est générée par le volet admission.

En zone de fonctionnement suralimenté avec contre pression :

$$P_{aval} = P_{atmo}$$

Le calcul dans cette zone est valable seulement si le volet admission est en position de pleine ouverture.

Avec dans les formules précédentes:

$P_{sural}$ : la pression en aval du compresseur,

$\Delta_p$ : la différence de pression aux bornes de la vanne EGR,

$P_{atmo}$ : la pression atmosphérique donnée par l'apprentissage de la valeur du capteur 201 de suralimentation ou du capteur 202 de pression dans le collecteur avant la mise en marche du moteur ou dans des phases particulières de fonctionnement du moteur.

Un dispositif de contrôle moteur intègre, outre le dispositif d'estimation de pression 50' évoqué précédemment, d'autres capteurs comme un quatrième capteur de température 203 implanté au niveau du collecteur 20 et un cinquième capteur de température 205 implanté en amont de la vanne EGR 30 et en aval du refroidisseur 29.

Dans les deux modes de réalisation, le dispositif d'estimation de pression met en oeuvre un procédé d'estimation de pression comprenant de préférence une étape de détermination de valeurs de paramètres du système d'admission et une étape de traitement des valeurs de sorte à calculer une estimation de la pression en aval d'un volet d'admission. Par étape de détermination de valeurs de paramètres du système d'admission, on entend une étape dans laquelle on détermine notamment par mesure tout paramètre de pression ou de température dans le système d'admission à l'exception de la pression en aval du volet d'admission.

Alternativement, dans les deux modes de réalisation, le dispositif d'estimation de pression fait partie d'un dispositif de diagnostic de l'état de fonctionnement d'un capteur mesurant la pression en aval du volet d'admission. Dans ce cas, un procédé de diagnostic est mis en oeuvre par ce dispositif de diagnostic. Le procédé de diagnostic comprend de préférence une étape de mise en oeuvre du procédé d'estimation d'une valeur de pression en aval du volet d'admission, une étape de mesure de la pression en aval du volet d'admission et une étape de comparaison des valeurs de pression estimée et mesurée.

Dans les deux modes de réalisation, le dispositif d'estimation de pression, et en particulier le calculateur, comprend tous les moyens permettant de régir son fonctionnement. A cette fin, le dispositif d'estimation comprend des moyens matériels et/ou logiciels de mise en oeuvre du procédé d'estimation selon l'invention. Les moyens logiciels peuvent notamment comprendre des programmes d'ordinateur. De la même façon, le dispositif de diagnostic comprend tous les moyens permettant de régir son fonctionnement. A cette fin, le dispositif de diagnostic comprend des moyens matériels et/ou logiciels de mise en oeuvre du procédé de diagnostic selon l'invention.

## Revendications

1. Procédé d'estimation de la pression ($P_{aval}$) en aval d'un volet d'admission (13) d'un système d'admission d'un moteur (10; 10') à combustion interne suralimenté, le procédé comprenant une étape de détermination de valeurs de paramètres du système d'admission et une étape de traitement des valeurs de sorte à calculer une estimation de la pression en aval d'un volet d'admission.

2. Procédé selon la revendication 1, **caractérisé en ce que** l'étape de détermination de valeurs comprend la détermination d'une valeur de pression ($P_{amont}$) en amont du volet d'admission, la détermination d'une valeur de débit ($Q_{air}$) traversant le volet d'admission et la détermination d'une valeur de température ($T_{amont}$) en amont du volet d'admission.

3. Procédé selon la revendication 2, **caractérisé en ce que** l'étape de traitement comprend le calcul suivant :

$$P_{aval} = P_{amont} \times Cfe^{-1}\left[ Q_{air} \times \frac{\sqrt{T_{amont}}}{P_{amont} \times SecEff} \right]$$

avec :

cfe un coefficient de flux surfacique propre au volet d'admission ; il s'agit d'une donnée de cartographie, définioe par exemple sur un banc aéraulique,
SecEff l'aire de la section efficace de passage du volet d'admission.

4. Procédé selon la revendication 1, **caractérisé en ce que** l'étape de détermination de valeurs comprend la détermination d'une valeur de pression ($P_{sural}$) en aval d'un compresseur (31) lorsque le moteur est en mode de fonctionnement atmosphérique.

5. Procédé selon la revendication 4, **caractérisé en ce que** l'étape de traitement comprend le traitement suivant :

$$P_{aval} = P_{sural}$$

lorsque le moteur est en mode de fonctionnement atmosphérique.

6. Procédé selon la revendication 1, 4 ou 5, **caractérisé en ce que** l'étape de détermination de valeurs comprend la détermination d'une valeur de pression ($P_{almo}$) la pression atmosphérique pour utilisation lorsque le moteur est en mode de fonctionnement suralimenté.

7. Procédé selon la revendication 6, **caractérisé en ce que** l'étape de traitement comprend le traitement suivant :

$$P_{aval} = P_{atmo}$$

lorsque le moteur est en mode de fonctionnement suralimenté avec contre pression.

8. Procédé selon la revendication 1, 4, 5, 6 ou 7, **caractérisé en ce que** l'étape de détermination de valeurs comprend la détermination d'une différence de pression ($\Delta_p$) aux bornes d'une vanne EGR (30) lorsque le moteur est en mode de fonctionnement suralimenté faible.

9. Procédé selon la revendication 8, **caractérisé en ce que** l'étape de traitement comprend le calcul suivant :

$$P_{aval} = P_{atmo} - \Delta_p$$

lorsque le moteur est en mode de fonctionnement suralimenté faible.

10. Procédé de diagnostic d'un capteur de pression en aval d'un volet d'admission (13) d'un système d'admission d'un moteur (10 ; 10') à combustion interne suralimenté, le procédé comprenant une étape de mise en oeuvre du procédé d'estimation selon l'une des revendications précédentes, une étape de mesure de pression grâce au capteur de pression en aval du volet d'admission et une étape de comparaison des valeurs estimée et mesurée de la pression.

11. Support d'enregistrement de données lisible par un calculateur (44 ; 44') sur lequel est enregistré un programme d'ordinateur comprenant des moyens logiciels de mise en oeuvre des étapes du procédé selon l'une des revendications précédentes.

12. Dispositif (50 ; 50') d'estimation de la pression ($P_{aval}$) en aval d'un volet d'admission (13) d'un système d'admission d'un moteur (10 ; 10') à combustion interne suralimenté, **caractérisé en ce qu'**il comprend des moyens matériels (101, 102, 105, 44 ; 201, 202, 204, 44') et/ou logiciels de mise en oeuvre du procédé d'estimation selon l'une des revendications 1 à 9.

13. Dispositif de diagnostic d'un capteur de pression en aval d'un volet d'admission (13) d'un système d'admission d'un moteur (10 ; 10') à combustion interne suralimenté, **caractérisé en ce qu'**il comprend un dispositif d'estimation selon la revendication 12.

14. Moteur (10 ; 10') à combustion interne suralimenté, **caractérisé en ce qu'**il comprend un dispositif de diagnostic selon la revendication 13 ou un dispositif d'estimation selon la revendication 12.

15. Moteur selon la revendication 14, **caractérisé en ce qu'**il comprend un moyen (28, 29, 30) de recirculation des gaz d'échappement entre la sortie d'une turbine (32) et l'entrée du compresseur (31) de suralimentation.

FIG.1

FIG.2

Europäisches
Patentamt

European
Patent Office

Office européen
des brevets

**RAPPORT DE RECHERCHE EUROPEENNE**

Numéro de la demande

EP 10 30 5428

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 662 127 A (TOYOTA MOTOR CO LTD [JP]) 31 mai 2006 (2006-05-31) * alinéas [0005], [0013] - [0051]; figures * ----- | 1,2,11, 12,14,15 | INV. F02D9/02 F02D23/00 F02D41/18 |
| X | EP 1 416 145 A (TOYOTA MOTOR CO LTD [JP]) 6 mai 2004 (2004-05-06) * alinéas [0007] - [0011], [0024]; figures * ----- | 1,2,11, 12 | |
| X | DE 10 2007 022703 B3 (CONTINENTAL AUTOMOTIVE GMBH [DE]) 20 novembre 2008 (2008-11-20) * alinéas [0006] - [0009]; figure 1 * ----- | 1,11,12 | |
| A | US 2008/091333 A1 (YAMASHITA) 17 avril 2008 (2008-04-17) * abrégé; figure 1 * ----- | 1 | |

**DOMAINES TECHNIQUES RECHERCHES (IPC)**

F02D

Le présent rapport a été établi pour toutes les revendications

| Lieu de la recherche | Date d'achèvement de la recherche | Examinateur |
|---|---|---|
| Munich | 23 juillet 2010 | Vedoato, Luca |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 30 5428

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-07-2010

| Document brevet cité au rapport de recherche | | Date de publication | Membre(s) de la famille de brevet(s) | | Date de publication |
|---|---|---|---|---|---|
| EP 1662127 | A | 31-05-2006 | JP | 4143862 B2 | 03-09-2008 |
| | | | JP | 2006152899 A | 15-06-2006 |
| | | | US | 2006116808 A1 | 01-06-2006 |
| EP 1416145 | A | 06-05-2004 | DE | 60306867 T2 | 06-09-2007 |
| | | | JP | 3900064 B2 | 04-04-2007 |
| | | | JP | 2004150345 A | 27-05-2004 |
| | | | US | 2004088101 A1 | 06-05-2004 |
| DE 102007022703 | B3 | 20-11-2008 | WO | 2008138669 A2 | 20-11-2008 |
| | | | US | 2010152992 A1 | 17-06-2010 |
| US 2008091333 | A1 | 17-04-2008 | CN | 101220779 A | 16-07-2008 |
| | | | DE | 102007000821 A1 | 24-04-2008 |
| | | | JP | 2008095642 A | 24-04-2008 |

EPO FORM P0460

Pour tout renseignement concernant cette annexe : voir Journal Officiel de l'Office européen des brevets, No.12/82